**Europäisches Patentamt**

(19) **European Patent Office**

**Office européen des brevets**

(11) **EP 1 279 641 A1**

(12) **EUROPÄISCHE PATENTANMELDUNG**

(43) Veröffentlichungstag:
29.01.2003 Patentblatt 2003/05

(51) Int Cl.$^7$: **C01B 6/04**, C01B 6/34

(21) Anmeldenummer: 01118210.2

(22) Anmeldetag: 28.07.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Aluminal Oberflächtentechnik GmbH & Co. KG**
**56249 Herschbach (DE)**

(72) Erfinder:
• **Heller, Jörg Dr.**
  **51766 Engelskirchen (DE)**

• **Gerlach, H.-P.**
  **56249 Herschbach (DE)**
• **de Vries, Hans**
  **8181 NG Heerde (NL)**

(74) Vertreter:
**Sternagel, Fleischer, Godemeyer & Partner Patentanwälte**
**An den Gärten 7**
**51491 Overath (DE)**

(54) **Verfahren zur Herstellung und Reinigung von Natriumhydrid**

(57) Die vorliegende Erfindung betrifft ein Verfahren zur Herstellung von Natriumhydrid, bei dem in eine auf Temperaturen oberhalb der Zersetzungstemperatur des Natriumhydrids von 420°C erhitzte Schmelze , die Natriumhydroxid oder ein Gemisch aus einem oder mehreren Alkalimetallhydroxiden unter Sauerstoff- und Feuchtigkeitsausschluss enthält, eine kohlenstoffhaltige Verbindung eingebracht und das Reaktionsprodukt anschließend bei Temperaturen ≤ 420°C außerhalb des Reaktionsmediums abgeschieden wird.

Des weiteren betrifft die Erfindung ein Verfahren zur Aufreinigung von verunreinigtem Natriumhydrid, bei dem dieses unter Sauerstoff- und Feuchtigkeitsausschluss in eine auf Temperaturen oberhalb der Zersetzungstemperatur des Natriumhydrids von 420°C erhitzte Schmelze, enthaltend ein oder mehrere Alkalimetallhydroxide, eingebracht und anschließend bei Temperaturen ≤ 420°C außerhalb des Schmelzmediums abgeschieden wird.

Fig. 1

EP 1 279 641 A1

Printed by Jouve, 75001 PARIS (FR)

**Beschreibung**

Die vorliegende Erfindung betrifft ein Verfahren zur Herstellung von reinstem feinkörnigem Natriumhydrid, sowie ein Verfahren zur Aufreinigung von verunreinigtem Natriumhydrid.

Natriumhydrid ist ein Salz, das in Reinform farblose Kristalle bildet, kommerziell jedoch aufgrund von Verunreinigung mit Natrium nur als graue Substanz erhältlich ist. Es ist extrem feuchtigkeitsempfindlich und entzündet sich in trockener Luft bei 230°C unter Bildung von Natriumoxid. Nach langsamer Freisetzung von Wasserstoff bei Temperaturen oberhalb von 300°C findet ab 420°C ohne vorheriges Schmelzen eine schnelle Zersetzung in die Elemente statt.

Natriumhydrid findet aufgrund seiner Basizität häufig Verwendung in der organisch-synthetischen Chemie zur Erzeugung von Carbanionen oder Deprotonierung, da es bereits unter milden Bedingungen sehr schnell ohne Bildung von Nebenprodukten abgesehen von Wasserstoff reagiert.

Komplexiert mit Alkoholaten und metallischen Salzen sowie bei hohen Temperaturen in geschmolzenem Natriumhydroxid stellt Natriumhydrid auch ein starkes Reduktionsmittel dar, das in erster Linie bei der Herstellung von feinpulvrigen Metallen und bei deren Oberflächenbehandlung zum Einsatz kommt.

Ein weiteres wichtiges Einsatzgebiet liegt in der Herstellung von gemischten Metallhydriden, wie beispielsweise $NaBH_4$ oder $NaAlH_4$, die ebenfalls in der organischen Synthese Anwendung finden. Insbesondere $NaAlH_4$ hat sich auch in vielversprechenden neuen Bereichen, wie zum Beispiel auf dem Gebiet der Wasserstoffspeicher, ausgezeichnet (s. Bogdanovic et al., Appl. Phys., A 72, 221-223 (2001)).

Aufgrund der geringen Löslichkeit des Natriumhydrids in inerten organischen Lösungsmitteln, hervorgerufen durch seinen salzartigen Charakter, ist für seine Verwendung sowohl bei organischen Synthesen als auch vor allem bei der Herstellung der gemischten Metallhydride die Partikelgröße und die Größe der Oberfläche entscheidend, die im ungünstigen Fall großer Partikel mit einer entsprechend kleinen Oberfläche eine zusätzliche Aktivierung erforderlich macht.

Die Herstellung von Natriumhydrid erfolgt bisher entweder durch das Überleiten von Wasserstoff über geschmolzenes Natrium bei 250-300°C bevorzugt in Mineralöl oder durch Hydrierung von Natriumoxid mit Wasserstoff unter gleichzeitiger Bildung von Natriumhydroxid. Das so erhaltene Natriumhydrid kommt dann dispergiert in Mineralöl oder mit NaOH brikettiert in den Handel und weist durch Verunreinigungen mit Natriummetall eine graue Färbung auf. (Römpp, Chemie-Lexikon, Bd. 4, 1995, S. 2928).

Die genannten Produktionsverfahren weisen nicht nur den Nachteil auf, dass sie relativ kostenintensiv sind, sondern sie machen für viele Anwendungen zudem eine zusätzliche, zum Teil sehr aufwendige, Aktivierung, Aufreinigung und/oder Pulverisierung des Natriumhydrids erforderlich. Da die Handhabung des Natriumhydrids zudem aufgrund seiner hohen Reaktivität nicht unproblematisch ist, hat sich dessen Einsatz häufig nur auf den Labormaßstab beschränkt.

DE 33 13 889 C2 beschreibt ein Verfahren sowie eine Vorrichtung zur Beseitigung von Gift- und Sondermüll. Zur Beseitigung biologischer Rückstände, insbesondere von Zellulose und Glucose, werden diese in einem Induktionsofen zusammen mit Natriumhydroxid auf ihre Zersetzungstemperatur erhitzt und bilden dann Natriumhydrid und CO. Das gebildete Natriumhydrid verbleibt jedoch unter den dort vorherrschenden Bedingungen als Feststoff gelöst in der Natriumhydroxid-Schmelze, so dass es analog zu den bisherigen Produktionsverfahren erhältlich ist.

Besonders im Hinblick auf die interessanten neuen Anwendungsgebiete wie die bereits erwähnten Wasserstoffspeicher liegt der vorliegenden Erfindung daher die Aufgabe zugrunde ein Verfahren zur Herstellung von Natriumhydrid bereitzustellen, das bei möglichst minimalem apparativem Aufwand kostengünstig ist und Natriumhydrid in reiner, feinverteilter Form liefert.

Überraschenderweise hat sich gezeigt, dass die Aufgabe erfindungsgemäß gelöst werden kann durch Einbringung von kohlenstoffhaltigen Verbindungen in eine Schmelze enthaltend Natriumhydroxid oder Gemische aus Natriumhydroxid und einem oder mehreren anderen Alkalimetallhydroxiden, die unter Sauerstoff- und Feuchtigkeitsausschluss auf eine Temperatur oberhalb der Zersetzungstemperatur des Natriumhydrids von 420°C erhitzt wird, und anschließende Abscheidung des Reaktionsproduktes außerhalb des Reaktionsmediums durch Abkühlung auf Temperaturen ≤ 420°C.

Das gebildete Natriumhydrid löst sich zunächst in der Schmelze, zersetzt sich dann jedoch aufgrund der dort vorherrschenden Temperaturen in Natrium und Wasserstoff. Es wird angenommen, dass der sowohl bei der Bildungsreaktion des Natriumhydrids als auch bei dessen Zersetzung gebildete gasförmige Wasserstoff dann beim Entweichen aus der Schmelze das Natrium mit sich reißt, so dass dieses durch Abkühlen an anderer Stelle außerhalb des Reaktionsmediums wieder rekombiniert und auf diese Weise Natriumhydrid in reinster Form als weißes Pulver mit einer Korngröße von < 20 µm bildet.

Während es nach dem Stand der Technik bekannt ist, dass sich Natriumhydrid oberhalb von 420°C schnell zersetzt, war überraschenderweise zu beobachten, dass bei dem vorliegenden erfindungsgemäßen Verfahren Wasserstoff und Natrium unter Ausbildung von hochreinem, feinkörnigem Natriumhydrid bei Abkühlung auf Temperaturen ≤420°C, bevorzugt bei 150 bis 300°C, wieder rekombinieren.

Als kohlenstoffhaltige Verbindungen, die sowohl fest als auch flüssig oder gasförmig sein können, finden bevorzugt industrielle Reststoffe wie Polyethylen, Polypropylen, Polyester, Altöl, Altgummi, Bitumina, Teere, Ölschlämme und Cellulose oder deren Gemische Verwendung.

Das vorliegende Verfahren weist somit den Vorteil auf, kostengünstige industrielle Reststoffe, die ansonsten teuer entsorgt werden müssten, in industriell verwertbare Materialien umzuwandeln.

Besonders vorteilhaft erfolgt die Aufheizung der Natriumhydroxid enthaltenden Schmelze auf Temperaturen von 650 bis 900°C. Maximale Ausbeuten werden dabei erzielt, wenn die Temperatur der Schmelze annähernd die Siedetemperatur von Natrium (881°C) aufweist, da es dann nicht mehr erforderlich ist, dass das Natrium von dem der Schmelze entweichenden Wasserstoff mitgerissen wird, sondern es der Schmelze selber als Gas entweichen kann.

Bei einer besonders bevorzugten Verfahrensweise wird in die Natriumhydroxid-Schmelze Wasserstoff eingeleitet. Dies hat einerseits den Vorteil, dass eine ständige Spülung mit Wasserstoff erfolgt, die die Bereitstellung einer sauerstoff- und feuchtigkeitsfreien Atmosphäre ermöglicht. Des weiteren bewirkt es ein effizienteres Austreiben des flüssigen Natriums bei Temperaturen der Schmelze unterhalb der Siedetemperatur des Natriums. Zudem erleichtert die Wasserstoffatmosphäre die Rekombination von Natrium und Wasserstoff zu Natriumhydrid. Bei Verwendung von Inertgasen anstelle von Wasserstoff sollte die Rekombination zu Natriumhydrid, obwohl prinzipiell möglich, erschwert sein, da die Stoßzahl, d.h. die Zahl der wirksamen Zusammenstöße zwischen zwei Teilchen, die zu einer Reaktion führen, u. a. abhängig ist von der Teilchendichte der einzelnen Teilchen im entsprechenden Volumen. Diese ist im Hinblick auf Wasserstoff in einer Wasserstoffatmosphäre natürlich wesentlich höher als in einer Inertgasatmosphäre, in der nur ein gewisser Anteil an Wasserstoff vorliegt.

Zur Isolierung der einzelnen bei der Reaktion gebildeten Produkte ist es vorteilhaft, das Gemisch aus Wasserstoff und gasförmigem oder mitgerissenem flüssigen Natrium aus dem Reaktionsraum abzuleiten. Dies ermöglicht es nicht nur das bei Kühlung rekombinierende Natriumhydrid gezielt abzuscheiden, sondern auch eventuell mitgerissenes Natriumcarbonat, das ebenfalls als Produkt entsteht und mit dem Gasstrom mitgerissen werden kann, vor der Abscheidung des Natriumhydrids, beispielsweise mittels eines Zyklonabscheiders, abzutrennen, um so möglichst reines Natriumhydrid zu erhalten.

Das auf diese Weise erzeugte Natriumhydrid fällt als weißes, hochreines, sehr feines Pulver mit einer Körngröße < 20 μm an und weist ohne zusätzliche Aktivierung eine hohe Reaktivität auf.

Der gebildete Wasserstoff ist frei von Verunreinigungen und kann je nach Bedarf weiterverwendet werden.

Die Besonderheit des zuvor beschriebenen Verfahrens, sich die Dissoziation des Natriumhydris beim Erhitzen und dessen erstmals festgestellte Rekombination beim Abkühlen unter den erfindungsgemäßen Bedingungen zunutze zu machen, kann auch auf die Aufreinigung von kommerziell erhältlichem, verunreinigtem Na triumhydrid übertragen werden.

Dabei wird anstelle der kohlenstoffhaltigen Verbindung direkt das verunreinigte Natriumhydrid unter Sauerstoff- und Feuchtigkeitsausschluss in die auf Temperaturen oberhalb der Zersetzungstemperatur des Natriumhydrids von 420°C erhitzte Schmelze, die ein Alkalimetallhydroxid oder ein Gemisch von Alkalimetallhydroxiden enthält, eingebracht und anschließend bei Temperaturen ≤ 420°C, bevorzugt bei 150 bis 300°C, außerhalb des Schmelzmediums wieder abgeschieden.

In diesem Fall ist es nicht zwingend erforderlich, dass die Schmelze Natriumhydroxid enthält, da ja bereits Natriumhydrid eingesetzt wird.

Auch hier löst sich zunächst das eingebrachte Natriumhydrid in der Schmelze und wird dann aufgrund der vorherrschenden Temperaturen zersetzt. Es wird vermutet, dass der dabei gebildete gasförmige Wasserstoff der Schmelze entweicht und das Natrium mit sich reißt. Bei Abkühlung dieses Reaktionsgemisches außerhalb des Schmelzmediums erfolgt eine Rekombination und damit eine Abscheidung von festem, hochreinem, feinpulvrigem Natriumhydrid.

Die Temperatur der Schmelze liegt bevorzugt zwischen 650 und 900°C. Bei der Aufreinigung von verunreinigtem Natriumhydrid können deutliche Ausbeutesteigerungen beobachtet werden je näher die Temperatur der Schmelze an der Siedetemperatur des Natriums liegt bzw. darüber hinaus geht. Dies wird dadurch erklärt, dass der Wasserstoff, der das Natrium aus der Schmelze mitreißt, lediglich aus der Zersetzung des verunreinigten Natriumhydrids herrührt und somit nur schwer in der Lage ist, das Natrium in vollem Umfang mitzureißen.

Aus demselben Grund weist ein bevorzugtes Verfahren auch das ununterbrochene Einleiten von Wasserstoff durch die Alkalimetallhydroxid-Schmelze auf. Dies ist nicht nur von Vorteil für das Mitreißen des Natriums aus der Schmelze, sondern insbesondere auch, um das Ausmaß der Rekombination durch eine Erhöhung der Wasserstoffdichte im Gasvolumen zu steigern.

Vorteilhafterweise wird das Natrium enthaltende Wasserstoffgas abgeleitet, so dass die durch Abkühlung bewirkte Abscheidung des Natriumhydrids gezielt außerhalb des Reaktionsraumes erfolgt und so eine Abtrennung des Natriumhydrids von den anderen Reaktionsprodukten ermöglicht.

Nachfolgend wird beispielhaft eine Anlage zur Durchführung des erfindungsgemäßen Verfahrens dargestellt, ohne die Durchführungsmöglichkeiten jedoch auf diese Anlage zu beschränken.

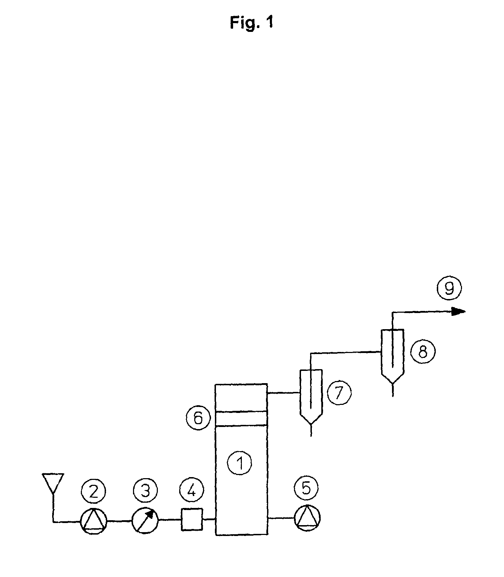

Figur 1 zeigt eine schematische Darstellung einer Anlage zur Natriumhydrid-Herstellung nach dem oben beschriebenen Verfahren. Darin bedeuten:

1    Reaktor
2    Materialzufuhr
3    Messgerät
4    Kühlvorrichtung
5    Wasserstoffeinleitung
6    interne Carbonatabscheidung
7    externe Carbonatabscheidung
8    Natriumhydridabscheidung
9    Wasserstoffableitung

Die Bildungsreaktion des Natriumhydrids findet in einem beheizbaren Reaktor 1, der zur Vermeidung von Verlusten an Wasserstoff aufgrund seiner großen Diffusionsgeschwindigkeit vorzugsweise aus kohlenstoffarmem Stahl besteht, und in dem sich mindestens Natriumhydroxid oder ein Gemisch aus Natriumhydroxid und einem oder mehreren anderen Alkalimetallhydroxiden befindet. Zur Wahrung einer sauerstoff- und feuchtigkeitsfreien Atmosphäre wird die Anlage vor der Einbringung des Natriumhydroxids vorzugsweise vollständig mit Wasserstoff gespült. Der Reaktor wird beispielsweise, aber nicht zwingendermaßen, elektrisch aufgeheizt, so dass in der entstehenden Natriumhydroxid-Schmelze Temperaturen zwischen 650 und 900°C vorliegen. Über eine Dosiervorrichtung 2 mit Hilfe eines Messgerätes 3, wie beispielsweise einem Durchflussmesser, erfolgt die Einbringung einer definierten Menge einer festen, flüssigen oder gasförmigen kohlenstoffhaltigen Verbindung oder eines Gemisches derselben in die Schmelze.

Um zu vermeiden, dass es aufgrund der hohen Temperaturen im Reaktor bereits an der Dosiervorrichtung zu Reaktionen kommt, die eine Verstopfung des Einlasses zur Folge haben können, besteht die Option diesen Bereich mit der Kühlvorrichtung 4 zu kühlen.

Nach Einbringung der kohlenstoffhaltigen Verbindung läuft in der Schmelze folgende Reaktion ab:

$$\text{"C"} + 3\,NaOH \rightarrow Na_2CO_3 + NaH + H_2$$

"C" steht dabei ganz allgemein für Kohlenstoff einer kohlenstoffhaltigen Verbindung.

Die bei der Reaktion freigesetzte Reaktionswärme bewirkt vorteilhafterweise, dass die Temperatur der Schmelze über einen längeren Zeitraum ohne zusätzliches Heizen aufrecht erhalten werden kann.

Mittels einer Verdichterpumpe 5 erfolgt eine ständige Einleitung von Wasserstoff in die Schmelze in einer besonders vorteilhaften Ausführungsform. Die Verdichterpumpe 5 ist dabei bevorzugt separat von der Materialzufuhr 2 angeordnet. Wie oben bereits dargelegt erleichtert dies sowohl das Austreiben des flüssigen oder gasförmigen Natriums aus der Schmelze als auch die Rekombination zum Natriumhydrid.

Um zu verhindern, dass das bei der Reaktion gebildete Natriumcarbonat mit dem Gasstrom aus der Schmelze mitgerissen wird und bei der Abscheidung des Natriumhydrids zu Verunreinigungen führt, befindet sich vorzugsweise im Reaktor bereits eine erste interne Vorrichtung 6, um das Natriumcarbonat zurückzuhalten, beispielsweise in Form eines Demisters.

Der Gasstrom gelangt dann zusammen mit dem Natrium und dem eventuell trotz des Demisters teilweise noch mitgerissenen Natriumcarbonat aus dem Reaktor in eine wahlweise beheizbare externe Carbonat-Abscheidungsvorrichtung 7, die hinter dem Reaktor angeordnet ist und in der das Natriumcarbonat abgetrennt wird. Es kann sich bei der Abscheidungsvorrichtung zum Beispiel um einen Zyklonabscheider handeln.

Daran schließt sich eine Vorrichtung 8 zum Abscheiden des Natriumhydrids an, die auch aus einem mit einer Kühlung versehenen Zyklonabscheider bestehen kann. Die Kühlung bewirkt die Rekombination von Natrium und Wasserstoff zu Natriumhydrid, welches sich, in die feste Phase überführt, als hochreines weißes, feinkörniges Pulver abscheidet und abtrennen lässt.

Der verbleibende Wasserstoff ist ebenfalls frei von Verunreinigungen und kann entweder vollständig oder teilweise wieder in die Schmelze eingeleitet oder über die Wasserstoffableitung 9 einer anderweitigen Verwendung zugeführt werden.

Nachfolgend sind in Tabelle 1 exemplarisch die Ergebnisse von Umsetzungen mit diversen Einsatzmaterialien zur Herstellung von Natriumhydrid in einer Anlage wie oben beschrieben aufgeführt, ohne die Erfindung jedoch damit auf diese zu beschränken.

Beispiele

Allgemeine Vorgehensweise

In eine auf Temperaturen von 670 bis 875°C ( s. Beispiele 1 bis 8 in Tabelle 1) aufgeheizte NaOH-Schmelze, die sich in einem aus kohlenstoffarmem Stahl bestehenden Reaktor befindet, der vor Beladung mit NaOH mit Wasserstoff gespült wurde, werden die in Tabelle 1 aufgeführten Einsatzmaterialien eingebracht. In die Schmelze wird ein Wasserstoffstrom eingeleitet, der zusammen mit den gasförmigen Reaktionsprodukten eine Ableitung erfährt. Ein im Reaktor befindlicher Demister hält das als ein Reaktionsprodukt gebildete Natriumcarbonat in der Schmelze zurück. Der gebildete Wasserstoff wird zusammen mit dem Natrium als Zersetzungsprodukt des Natriumhydrids mit dem eingeleiteten Wasserstoffstrom zunächst außerhalb des Reaktors in einen auf eine Temperatur von 420 bis 530°C geheizten Zyklonabscheider geleitet und das unbeabsichtigt mitgerissene Natriumcarbonat abgetrennt. Der verbleibende Gasstrom durchläuft einen zweiten Zyklonabscheider, in dem bei einer Temperatur von 150 bis 300°C die Rekombination des Natriumhydrids und dessen Abscheidung erfolgt. Ein Teil des verbleibenden Wasserstoffs wird wieder in die Schmelze geleitet, ein anderer Teil zur anderweitigen Verwendung aufgefangen.

Tabelle 1

| Umsetzungen diverser Einsatzmaterialien zur Herstellung von NaH | | | | | | |
|---|---|---|---|---|---|---|
| Beispiel | Einsatzmaterial | Durchsatz | Temperatur der Schmelze | Gewicht der Schmelze | Ausbeute NaH | |
| | | | [°C] | [kg] | [g] | [% d. Th.] |
| 1 | Propangas | 150 l | 670 | 6,8 | 459 | 95 |
| 2 | Propangas | 147 l | 776 | 6,8 | 451 | 96 |
| 3 | Propangas | 284 l | 872 | 6,8 | 871 | 96 |
| 4 | Paraffinöl | 0,42 l | 873 | 6,8 | 528 | >99 |
| 5 | Gummi (Isopren) | 88,3 g | 873 | 6,8 | 155 | >99 |
| 6 | Altgummi | 529 g | 873 | 6,8 | 886 | 95 |
| 7 | Altgummi/Altöl (Gew.verh.1:1) | 567g | 872 | 6,8 | 925 | 95 |
| 8 | Kohlenstoff | 78,3g | 871 | 6,8 | 155 | >99 |

Den einzelnen Umsetzungen werden folgende Reaktionsgleichungen zugrunde gelegt:

Propangas: $C_3H_8 + 9\ NaOH \rightarrow 3\ NaH + 7\ H_2 + 3\ Na_2CO_3$

Paraffinöl: $C_{12}H_{26} + 36\ NaOH \rightarrow 12\ NaH + 12\ Na_2CO_3 + 25\ H_2$

Isopren: $C_5H_8 + 15\ NaOH \rightarrow 5\ NaH + 5\ Na_2CO_3 + 9\ H_2$

Kohlenstoff: $C + 3\ NaOH \rightarrow NaH + Na_2CO_3 + H_2$

**Patentansprüche**

1. Verfahren zur Herstellung von Natriumhydrid, wobei in eine auf Temperaturen oberhalb der Zersetzungstemperatur des Natriumhydrids von 420°C erhitzte Schmelze, enthaltend Natriumhydroxid oder ein Gemisch aus Natriumhydroxid und einem oder mehreren Alkalimetallhydroxiden, unter Sauerstoff- und Feuchtigkeitsausschluss eine kohlenstoffhaltige Verbindung eingebracht und das Reaktionsprodukt anschließend bei Temperaturen ≤420°C außerhalb des Reaktionsmediums abgeschieden wird.

2. Verfahren nach Anspruch 1, **dadurch gekennzeichnet, dass** als kohlenstoffhaltige Verbindungen, die sowohl fest als auch flüssig oder gasförmig sein können, industrielle Reststoffe oder Gemische derselben zum Einsatz kommen.

3. Verfahren nach den Ansprüchen 1 oder 2, **dadurch gekennzeichnet, dass** die Schmelze auf Temperaturen zwischen 650 und 900°C aufgeheizt wird.

4. Verfahren nach den Ansprüchen 1 bis 3, **dadurch gekennzeichnet, dass** in die Natriumhydroxid-Schmelze ein Wasserstoffstrom eingeleitet wird.

5. Verfahren nach den Ansprüchen 1 bis 4, **dadurch gekennzeichnet, dass** das gebildete Natriumhydrid in Form seiner Zersetzungsprodukte zusammen mit dem gebildeten und/oder eingeleiteten Wasserstoffgas abgeleitet und nach anschließender Rekombination durch Kühlung wieder abgeschieden wird.

6. Natriumhydrid erhältlich durch das Verfahren gemäß den Ansprüchen 1 bis 5.

7. Natriumhydrid nach Anspruch 6, **dadurch gekennzeichnet, dass** es als weißes Pulver mit einer Korngröße < 20 µm vorliegt.

8. Verfahren zur Aufreinigung von verunreinigtem Natriumhydrid, **dadurch gekennzeichnet, dass** dieses unter Sauerstoff- und Feuchtigkeitsausschluss in eine auf Temperaturen oberhalb der Zersetzungstemperatur des Natriumhydrids von 420°C erhitzte Schmelze, enthaltend ein Alkalimetallhydroxid oder ein Gemisch von Alkalimetallhydroxiden, eingebracht und anschließend bei Temperaturen ≤ 420°C außerhalb des Schmelzmediums abgeschieden wird.

9. Verfahren nach Anspruch 8, **dadurch gekennzeichnet, dass** die Schmelze auf Temperaturen zwischen 650 und 900°C aufgeheizt wird.

10. Verfahren nach den Ansprüchen 8 oder 9, **dadurch gekennzeichnet, dass** in die Alkalimetallhydroxid-Schmelze ununterbrochen ein Wasserstoffstrom eingeleitet wird.

11. Verfahren nach den Ansprüchen 8 bis 10, **dadurch gekennzeichnet, dass** das Natriumhydrid in Form seiner Zersetzungsprodukte, gegebenenfalls zusammen mit dem eingeleiteten Wasserstoffgas, abgeleitet und nach anschließender Rekombination durch Kühlung wieder abgeschieden wird.

**Fig. 1**

**Europäisches Patentamt**

**EUROPÄISCHER RECHERCHENBERICHT**

Nummer der Anmeldung

EP 01 11 8210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 17 17 160 A (SCHLOEMANN AG) 5. August 1971 (1971-08-05) * das ganze Dokument * | 1-11 | C01B6/04 C01B6/34 |
| X | GB 405 017 A (ROESSLER & HASSLACHER CHEMICAL) 29. Januar 1934 (1934-01-29) * das ganze Dokument * | 6,7 | |
| A | IDEM | 1,8 | |

**RECHERCHIERTE SACHGEBIETE (Int.Cl.7)**

C01B

Der vorliegende Recherchenbericht wurde für alle Patentansprüche erstellt

| Recherchenort | Abschlußdatum der Recherche | Prüfer |
|---|---|---|
| DEN HAAG | 21. Dezember 2001 | Van der Poel, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 8210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-12-2001

| Im Recherchenbericht angeführtes Patentdokument | Datum der Veröffentlichung | Mitglied(er) der Patentfamilie | Datum der Veröffentlichung |
|---|---|---|---|
| DE 1717160 A | 05-08-1971 | AT 282553 B | 10-07-1970 |
| | | BE 726794 A | 16-06-1969 |
| | | DE 1717160 A1 | 05-08-1971 |
| | | FR 1598859 A | 06-07-1970 |
| | | GB 1257966 A | 22-12-1971 |
| | | NL 6818336 A | 12-08-1969 |
| | | SE 335326 B | 24-05-1971 |
| GB 405017 A | 29-01-1934 | KEINE | |

EPO FORM P0461

Für nähere Einzelheiten zu diesem Anhang : siehe Amtsblatt des Europäischen Patentamts, Nr.12/82